# EUROPEAN PATENT SPECIFICATION

(11) **EP 3 873 752 B1**
(45) Date of publication and mention of the grant of the patent: **21.12.2022**
(21) Application number: 19804888.6
(22) Date of filing: 30.10.2019
(51) Int. Cl.: B60C 15/02, B60C 15/06

(54) **A TIRE HAVING RECESSES IN BEAD AREA**
REIFEN MIT VERTIEFUNGEN IM WULSTBEREICH
PNEU AYANT DES ÉVIDEMENTS DANS UNE ZONE DE TALON

(30) Priority: 30.10.2018 JP 2018203929
(43) Date of publication of application: 08.09.2021
(73) Proprietor: COMPAGNIE GENERALE DES ETABLISSEMENTS MICHELIN, 63000 Clermont-Ferrand (FR)
(72) Inventor: PROU, Joris, Tokyo, 163-1073 (JP); BABAUD, Jacques, Tokyo, 163-1073 (JP)
(74) Representative: Regimbeau
(86) International application number: PCT/JP2019/042571
(87) International publication number: WO 2020/090885

(56) References cited:
- EP-A1- 1 361 076
- JP-A- 2004 106 796
- US-A1- 2010 269 970

## Description

### Technical Field

The present invention relates to a tire, in particular to a tire for improving noise performance while maintaining handling performance.

### [Background Art]

In recent years, premiumisation and quality improvement of vehicles lead, from the view point of occupant's comfort and environmental considerations, desire to various noise reductions.

It is known that the noise from the tires includes various components, that is a component from external noise and a component from internal noise. The internal noise includes a vibration due to excitation of a tread portion during rolling, the vibration is transmitted to a wheel rim, an axis, a suspension and a body of the vehicle then heard in an interior of the vehicle as noise.

In order to improve such the noise, it is known that improvement of an interface between a bead region of a tire and a wheel rim is effective. Various solutions have been proposed to improve such the noise.

US2010/0269970A discloses a tire comprising at least one circumferentially continuous groove in a ledge region of a bead portion and at least one circumferentially continuous groove in a flange region of the bead portion for improving contact at a tire and a rim interface of a tire.

WO01/043993A1 discloses a tire comprising a plurality of cavities extending along a bead surface of a pair of bead regions in contact with a wheel rim during normal inflated operation for improving an interface between a bead region of a tire and a wheel rim interface for maintaining bead seating at very low inflation pressure.

JPS62-299411 discloses a tire comprising a plurality of projections in a region in contact with a rim flange within a bead portion for improving productivity of the tire and an interface between the bead portion and the rim flange.

JPH11-147408 discloses a tire provided with a vibration absorbing rubber at a portion in a bead region in contact with bead flange in an offset manner for improving road noise performance. EP1361076 discloses a pneumatic tire comprising a sidewall portions provided with an axially protruding rim protector extending continuously in tire circumferential direction, a radially inner surface of the rim protector is provided along tire circumferential direction with at least one recess having a depth of from 0.5 to 7.0 mm for solving a problem of stone entrapment, minimize an increase in a tire weight without deteriorating its function of rim protection. JP2004-106796 discloses a pneumatic tire provided with a rubber composition for a sidewall being compounded from polybutadiene rubber having many linear component and a rubber composition for a clinch being compounded from polybutadiene rubber and/or syndiotactic-1, 2-polybutadiene rubber, and the rubber compositions having specific viscoelastic property for improving handling performance and rolling resistance.

### [Citation List]

### [Patent Literature]

[PTL 1]
   US2010/0269970
[PTL 2]
   WO01/043993
[PTL 3]
   JPS62-299411
[PTL 4]
   JPH11-147408
[PTL 5]
   EP1361076
[PTL 6]
   JP2004-106796

However with the solutions disclosed in these documents, noise performance improvement is limited when considering maintenance of handling performance, or handling performance is degraded even with a little improvement on noise performance.

Therefore, there is a need for a tire which provides improvement on noise performance while maintaining handling performance.

### Definitions:

A "radial direction/orientation" is a direction/orientation perpendicular to axis of rotation of the tire. This direction/orientation corresponds to thickness orientation of the tread.

An "axial direction/orientation" is a direction/orientation parallel to axis of rotation of the tire.

A "circumferential direction/orientation" is a direction/orientation which is tangential to any circle centered on axis of rotation. This direction/orientation is perpendicular to both the axial direction/orientation and the radial direction/orientation.

A "tire" means all types of elastic tire whether or not subjected to an internal pressure.

A "tread" of a tire means a quantity of rubber material bounded by lateral surfaces and by two main surfaces one of which is intended to come into contact with ground when the tire is rolling.

A "groove" is a space between two rubber faces/sidewalls which do not contact between themselves under usual rolling condition connected by another rubber face/ bottom. A groove has a width and a depth.

It is thus an object of the invention to provide improvement on noise performance while maintaining handling performance.

### Summary of Invention

The present invention provides a tire comprising a pair of bead regions comprising an annular reinforcing structure and at least one carcass reinforcement which is anchored in the pair of bead regions, a protector portion positioned axially outward and radially inward from the annular reinforcing structure, the protector portion comprising a protector surface intended to come into contact at least partly with a rim flange and/or a rim sheet of a wheel rim, the protector portion being provided with at least 2 recessed portions recessed from the protector surface toward interior of the tire with a depth D, the at least 2 recessed portions having a minimum distance T between one another, Young's modulus E of a rubber composition constituting the protector portion is in a range from 1.5 to 6.0 MPa.

This arrangement provides improvement on noise performance while maintaining handling performance.

Since the protector portion being provided with at least 2 recessed portions recessed from the protector surface toward interior of the tire and Young's modulus E of a rubber composition constituting the protector portion is in a range from 1.5 to 6.0 MPa, the protector portion provided with relatively soft rubber composition combined with the at least 2 recessed portions has compressibility which makes it possible to reduce effort transfer from the tire to the wheel rim. Therefore it is possible to improve noise performance.

If Young's modulus E of the rubber composition constituting the protector portion is less than 1.5 MPa, there is a risk that both noise and handling performance would be degraded as the protector portion becomes too soft leading too much deformation in the recessed portion. If Young's modulus E of the rubber composition constituting the protector portion is more than 6.0 MPa, there is a risk that noise performance cannot be improved due to incompressibility of the rubber composition makes the protector portion appear stiff. By setting Young's modulus E of the rubber composition constituting the protector portion in the range from 1.5 to 6.0 MPa, the protector portion can effectively reduce transfer of the effort from the tire to the wheel rim while maintaining sufficient effort transfer for handling performance.

This Young's modulus E of the rubber composition constituting the protector portion is preferably in the range from 1.5 to 5.0 MPa, more preferably in the range from 1.5 to 4.0 MPa.

Since the at least 2 recessed portions having a minimum distance T between one another, it is possible to prevent excessive deformation of the protector portion. Therefore it is possible to maintain handling performance while improving noise performance by reducing effort transfer from the tire to the wheel rim thanks to the at least 2 recessed portions provided with relatively softer rubber composition.

In another preferred embodiment, the at least 2 recessed portions are at least 2 grooves extending in circumferential orientation.

According to this arrangement, it is possible to manufacture efficiently the at least 2 recessed portions, thus productivity of the tire provided with at least 2 recessed portions can be improved.

In another preferred embodiment, each the at least 2 recessed portions have circular, triangular, rectangular, polygonal or combination of these shapes on the protector surface.

According to this arrangement, it is possible to maintain a shape of the recessed portions when tire being mounted onto the wheel rim for the recessed portions act for reducing effort transfer from the tire to the wheel rim while preventing too much deformation, thus noise performance is improved while maintaining handling performance.

In another preferred embodiment, the at least 2 recessed portions are combination of at least 2 grooves extending in circumferential orientation and recesses having circular, triangular, rectangular, polygonal or combination of these shapes on the protector surface.

According to this arrangement, it is possible to improve design freedom for placing the at least 2 recessed portions onto the protector portion.

In another preferred embodiment, the depth D of the at least 2 recessed portions is in a range from 40 to 80% of a shortest distance from the protector surface to the axially outermost carcass reinforcement at a position where the plurality of recessed portions being located.

If the depth D of the at least 2 recessed portions is less than 40% of the shortest distance from the protector surface to the axially outermost carcass reinforcement at the position where the plurality of recessed portions being located, there is a risk that the compressibility of the protector portion due to the recessed portions would become insufficient for reducing effort transfer from the tire to the wheel rim. If the depth D of the at least 2 recessed portions is more than 80% of the shortest distance from the protector surface to the axially outermost carcass reinforcement at the position where the plurality of recessed portions being located, there is a risk of endurance performance degradation due to too much movement of a part of the protector portion without the recessed portions which may initiate cracking at an inner part of the recessed portions. By setting this depth D of the at least 2 recessed portions is in a range from 40 to 80% of a shortest distance from the protector surface to the axially outermost carcass reinforcement at a position where the plurality of recessed portions being located, it is possible to effectively improve noise performance while maintaining handling performance.

In another preferred embodiment, a void ratio on the protector surface due to the at least 2 recessed portions is in a range from 35 to 65%.

If the void ratio on the protector surface due to the at least 2 recessed portions is less than 35%, there is a risk that compressibility of the protector portion due to the recessed portions would become insufficient for reducing effort transfer from the tire to the wheel rim. If the void ratio on the protector surface due to the at least 2 recessed portions is more than 65%, there is a risk that the protector portion becomes too soft which leads degradation of handling performance. By setting this void ratio on the protector surface due to the at least 2 recessed portions is in a range from 35 to 65%, it is possible to effectively improve noise performance while maintaining handling performance.

In another preferred embodiment, an aspect ratio defined as a ratio between the depth D of the at least 2 recessed portions and the minimum distance T between each the at least 2 recessed portions (D/T) is in a range from 2/3 to 4/3.

If the aspect ratio defined as the ratio between the depth D of the at least 2 recessed portions and the minimum distance T between each the at least 2 recessed portions (D/T) is less than 2/3, there is a risk that compressibility of the protector portion provided by the recessed portions and relatively softer rubber composition becomes insufficient for reducing effort transfer from the tire to the wheel rim leading insufficient improvement on noise performance. If the aspect ratio defined as the ratio between the depth D of the at least 2 recessed portions and the minimum distance T between each the at least 2 recessed portions (D/T) is more than 4/3, there is a risk that compressibility of the protector portion becomes too much leading degradation of handling performance. By setting this aspect ratio defined as the ratio between the depth D of the at least 2 recessed portions and the minimum distance T between each the at least 2 recessed portions (D/T) is in a range from 2/3 to 4/3, it is possible to effectively improve noise performance while maintaining handling performance.

### Advantageous Effects of Invention

According to the arrangements described above, it is possible to provide improvement on noise performance while maintaining handling performance.

### Brief Description of Drawings

Other characteristics and advantages of the invention arise from the description made hereafter in reference to the annexed drawings which show, as nonrestrictive examples, the embodiment of the invention.

In these drawings:
[fig.1]Fig. 1 is a schematic cross sectional view of a bead region of a tire according to a first embodiment of the present invention;
[fig.2]Fig. 2 is an enlarged schematic view showing a portion indicated as II in Fig. 1;
[fig.3]Fig. 3 is a partial perspective view of a bead region of a tire according to a first embodiment of the present invention;
[fig.4]Fig. 4 is a schematic plan view of a bead region of a tire according to a second embodiment of the present invention;
[fig.5]Fig. 5 is a cross sectional view taken along line V-V in Fig. 4;

### Description of Embodiments

Preferred embodiments of the present invention will be described below referring to the drawings.

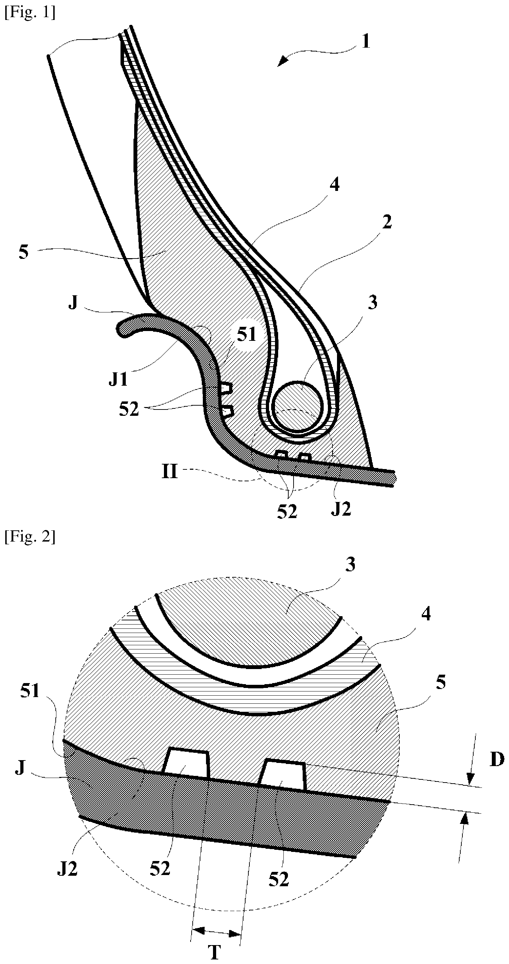

A tire 1 according to a first embodiment of the present invention will be described referring to Figs. 1, 2 and 3.

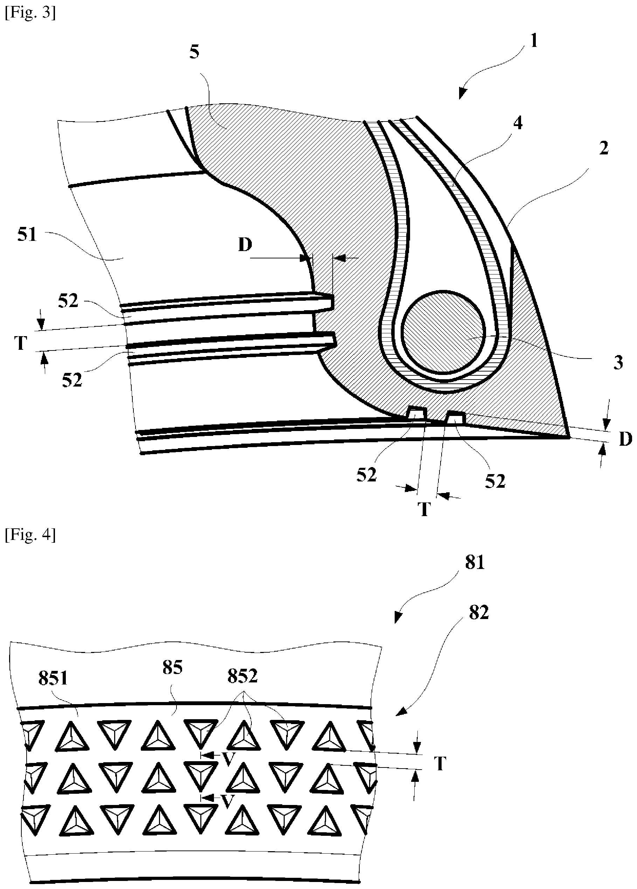

Fig. 1 is a schematic cross sectional view of a bead region of a tire according to a first embodiment of the present invention. Fig. 2 is an enlarged schematic view showing a portion indicated as II in Fig. 1. Fig. 3 is a partial perspective view of a bead region of a tire according to a first embodiment of the present invention.

The tire 1 is a tire comprising a pair of bead regions 2 (only one shown in Fig. 1) comprising an annular reinforcing structure 3 and one carcass reinforcement 4 which is anchored in the pair of bead regions 2, a protector portion 5 positioned axially outward and radially inward from the annular reinforcing structure 3, the protector portion 5 comprising a protector surface 51 intended to come into contact with rim at least partly with a rim flange J1 and/or a rim sheet J2 of a wheel rim J. The tire 1 is also provided with other components usually used in a tire, for example sidewall, inner liner, bead filler, tread (not shown) or summit reinforcing structure (not shown).

As shown in Fig. 1, the protector portion 5 is provided with at least 2 recessed portions 52 recessed from the protector surface 51 toward interior of the tire 1 with a depth D (shown in Figs. 2 & 3), the at least 2 recessed portions 52 have a minimum distance T between one another (shown in Figs. 2 & 3). Young's modulus E of a rubber composition constituting the protector portion 5 is in a range from 1.5 to 6.0 MPa. In this first embodiment, 4 (four) trapezoid shaped recessed portions 52 are provided, 2 (two) on the protector surface 51 facing to the rim flange J1, and other 2 (two) on the protector surface 51 facing to the rim sheet J2, the Young's modulus E of the rubber composition constituting the protector portion 5 is 2.0 MPa where Young's modulus E of the rubber composition constituting the protector portion 5 for normal passenger car tire is around 10.0 MPa. Young's modulus E in this document is a compression modulus at 10% strain following the standard JIS K 6254.

As shown in Fig. 2, the depth D of the at least 2 recessed portions 52 is in a range from 40 to 80% of a shortest distance from the protector surface 51 to the axially outermost carcass reinforcement 4 at a position where the plurality of recessed portions 52 being located. An aspect ratio defined as a ratio between the depth D of the at least 2 recessed portions 52 and the minimum distance T between each the at least 2 recessed portions 52 (D/T) is in a range from 2/3 to 4/3.

As shown in Fig. 3, the recessed portions 52 are grooves extending in circumferential orientation on the protector surface 51. A void ratio on the protector surface 51 due to the recessed portions 52 is in a range from 35 to 65%. The depth D of the recessed portions 52 and the minimum distance T between each the recessed portions 52 are both different between the recessed portions 52 on the protector surface 51 facing to the rim flange J1 and the recessed portions 52 on the protector surface 51 facing to the rim sheet J2.

Since the protector portion 5 is provided with at least 2 recessed portions 52 recessed from the protector surface 51 toward interior of the tire 1 and Young's modulus E of the rubber composition constituting the protector portion 5 is in the range from 1.5 to 6.0 MPa, the protector portion 5 provided with relatively soft rubber composition combined with the at least 2 recessed portions 52 has compressibility which makes it possible to reduce effort transfer from the tire 1 to the wheel rim J. Therefore it is possible to improve noise performance.

If Young's modulus E of the rubber composition constituting the protector portion 5 is less than 1.5 MPa, there is a risk that both noise and handling performance would be degraded as the protector portion 5 becomes too soft leading too much deformation in the recessed portions 52. If Young's modulus E of the rubber composition constituting the protector portion 5 is more than 6.0 MPa, there is a risk that noise performance cannot be improved due to incompressibility of the rubber composition makes the protector portion 5 appear stiff. By setting Young's modulus E of the rubber composition constituting the protector portion 5 in the range from 1.5 to 6.0 MPa, the protector portion 5 can effectively reduce transfer of the effort from the tire 1 to the wheel rim J while maintaining sufficient effort transfer for handling performance.

This Young's modulus E of the rubber composition constituting the protector portion 5 is preferably in the range from 1.5 to 5.0 MPa, more preferably in the range from 1.5 to 4.0 MPa.

Since the at least 2 recessed portions 52 having a minimum distance T between one another, it is possible to prevent excessive deformation of the protector portion 5. Therefore it is possible to maintain handling performance while improving noise performance by reducing effort transfer from the tire 1 to the wheel rim J thanks to the at least 2 recessed portions 52 provided with relatively softer rubber composition.

Since the at least 2 recessed portions 52 are at least 2 grooves extending in circumferential orientation, it is possible to manufacture efficiently the at least 2 recessed portions 52, thus productivity of the tire 1 provided with at least 2 recessed portions 52 can be improved.

Since the depth D of the at least 2 recessed portions 52 is in a range from 40 to 80% of the shortest distance from the protector surface 51 to the axially outermost carcass reinforcement 4 at the position where the plurality of recessed portions 52 being located, it is possible to effectively improve noise performance while maintaining handling performance.

If the depth D of the at least 2 recessed portions 52 is less than 40% of the shortest distance from the protector surface 51 to the axially outermost carcass reinforcement 4 at the position where the plurality of recessed portions 52 being located, there is a risk that the compressibility of the protector portion 5 due to the recessed portions 52 would become insufficient for reducing effort transfer from the tire 1 to the wheel rim J. If the depth D of the at least 2 recessed portions 52 is more than 80% of the shortest distance from the protector surface 51 to the axially outermost carcass reinforcement 4 at the position where the plurality of recessed portions 52 being located, there is a risk of endurance performance degradation due to too much movement of a part of the protector portion 5 without the recessed portions 52 which may initiate cracking at an inner part of the recessed portions 52.

Since the void ratio on the protector surface 51 due to the at least 2 recessed portions 52 is in the range from 35 to 65%, it is possible to effectively improve noise performance while maintaining handling performance.

If the void ratio on the protector surface 51 due to the at least 2 recessed portions 52 is less than 35%, there is a risk that compressibility of the protector portion 5 due to the recessed portions 52 would become insufficient for reducing effort transfer from the tire 1 to the wheel rim J. If the void ratio on the protector surface 51 due to the at least 2 recessed portions 52 is more than 65%, there is a risk that the protector portion 5 becomes too soft which leads degradation of handling performance.

Since the aspect ratio defined as the ratio between the depth D of the at least 2 recessed portions 52 and the minimum distance T between each the at least 2 recessed portions 52 (D/T) is in the range from 2/3 to 4/3, it is possible to effectively improve noise performance while maintaining handling performance.

If the aspect ratio defined as the ratio between the depth D of the at least 2 recessed portions 52 and the minimum distance T between each the at least 2 recessed portions 52 (D/T) is less than 2/3, there is a risk that compressibility of the protector portion 5 provided by the recessed portions 52 and relatively softer rubber composition becomes insufficient for reducing effort transfer from the tire 1 to the wheel rim J leading insufficient improvement on noise performance. If the aspect ratio defined as the ratio between the depth D of the at least 2 recessed portions 52 and the minimum distance T between each the at least 2 recessed portions 52 (D/T) is more than 4/3, there is a risk that compressibility of the protector portion 5 becomes too much leading degradation of handling performance.

The annular reinforcing structure 3 may have a shape different than circular shape, for example triangular or polygonal shape, or may be piles described in the document US5660656A.

A cross sectional shape and/or the depth D of the recessed portions 52 may be the same among all the recessed portions 52, may be different among each the recessed portions 52.

The recessed portions 52 may be provided only on the protector surface 51 facing to the rim flange J1, may be provided only on the protector surface 51 facing to the rim sheet J2.

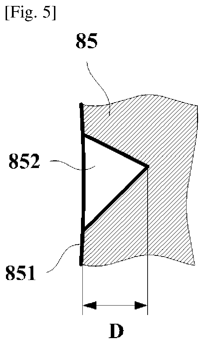

A tire 81 according to a second embodiment of the present invention will be described referring to Figs. 4 and 5. Fig. 4 is a schematic plan view of a bead region of a tire according to a second embodiment of the present invention. Fig. 5 is a cross sectional view taken along line V-V in Fig. 4. The construction of this second embodiment is similar to that of the first embodiment other than the arrangement shown in Figs. 4 and 5, thus description will be made referring to Figs. 4 and 5.

As shown in Fig. 4, a bead region 82 of a tire 81 being provided with a protector portion 85 comprising a protector surface 851 intended to come into contact at least partly with a rim flange J1 and/or a rim sheet J2 of a wheel rim (not shown), the protector portion 85 facing to the rim flange J1 (not shown) being provided with at least 2 recessed portions 852 recessed from the protector surface 851 toward interior of the tire 81 with a depth D (shown in Fig. 5), the at least 2 recessed portions 852 having a minimum distance T between one another. Young's modulus E of a rubber composition constituting the protector portion 85 is in a range from 1.5 to 6.0 MPa.

As shown in Figs. 4 and 5, each the at least 2 recessed portions 852 have triangular shape on the protector surface 851, an overall shape of each the recessed portions 852 is trigonal pyramid shape. A set of 3 recessed portions 852 are radially in line as to align one corner of the recessed portion 852 toward radial orientation of the tire 81, another set of the 3 recessed portions 852 is placed at circumferentially distant position as to align one corner of the recessed portions 852 opposite to circumferentially adjacent set of the 3 recessed portions 852.

Since each the at least 2 recessed portions 852 have circular, triangular, rectangular, polygonal or combination of these shapes on the protector surface 851, it is possible to maintain a shape of the recessed portions 852 when tire 81 being mounted onto the wheel rim J for the recessed portions 852 act for reducing effort transfer from the tire 81 to the wheel rim J while preventing too much deformation, thus noise performance is improved while maintaining handling performance.

A size, shape, orientation and the depth D of the recessed portions 852 may vary among each other, or all the recessed portions 852 may have the same dimensional configuration.

As another preferred embodiment of the present invention not shown in drawings, the at least 2 recessed portions 852 are combination of at least 2 grooves extending in circumferential orientation and recesses having circular, triangular, rectangular, polygonal or combination of these shapes on the protector surface 851. According to this arrangement, it is possible to improve design freedom for placing the at least 2 recessed portions 852 onto the protector portion 85.

### Examples

In order to confirm the effect of the present invention, one type of tire of Example to which the present invention is applied and other types of tires of Reference and Comparative Example were prepared.

The Example was a tire as described in the above the first embodiment provided with at least 2 recessed portions in a form of circumferential groove and Young's modulus E of the rubber composition constituting the protector portion was equal to 2.0 MPa. The Comparative Example 1 was a tire provided without the recessed portions and Young's modulus E of the rubber composition constituting the protector portion was equal to 0.5 MPa. The Comparative Example 1 was a tire provided with the recessed portions and Young's modulus E of the rubber composition constituting the protector portion was equal to 9.6 MPa. The Reference was a tire provided without the recessed portions and Young's modulus E of the rubber composition constituting the protector portion was equal to 9.6 MPa. All the Example, Comparative Examples and Reference were in the same tire size 235/45R18, and had the same internal construction as normal radial pneumatic tire using the same material other than the protector portion.

Noise performance tests:
Unused test tires were mounted onto all four wheels of a 2,500 cc rear-wheel drive vehicle. On a straight path weathered asphalt, the vehicle was driven at a constant speed of 80 kph. An interior noise was measured using a microphone positioned at a passenger's ear close to window. An A-weighted sound pressure level between 0 and 500 Hz was calculated.

The results are shown in table 1. In this table 1, results are represented by difference in dB(A) against Reference, lower the value indicates better the performance.

Handling performance tests:
A cornering power of unused test tires, except Comparative Example 1 which would be obvious to be degraded on this performance for those skilled in the art, mounted onto a standard rim and inflated to nominal internal pressure were measured using a flat belt tire tester. A load of 460kg was applied while tires driven at a constant speed of 80 kph, lateral force at a slip angle of ± 1° was measured, and the lateral forces measured at +1° and at -1° were averaged.

The results are also shown in table 1. In this table 1, results are represented by an index of 100 for Reference, higher the number indicates better the performance.

**[Table 1]**

| | Example | Comparative Example 1 | Comparative Example 2 | Reference |
|---|---|---|---|---|
| Recessed portions (Yes/No) | Yes | No | Yes | No |
| Young's modulus E (MPa) | 2.0 | 0.5 | 9.6 | 9.6 |
| Noise performance (dBA) | -0.6 | -0.4 | 0.0 | 0.0 |
| Handling performance (index) | 99 | - | 101 | 100 |

As seen from table 1, the Example shows improvement on noise performance while maintaining handling performance, which cannot be achieved by recessed portions only nor relatively softer rubber composition for the protector portion only.

### Reference Signs List

1, 81 tire
2, 82 bead region
3 annular reinforcing structure
4 carcass reinforcement
5, 85 protector portion
51, 851 protector surface
52, 852 recessed portion

## Claims

1. A tire (1) comprising a pair of bead regions (2) comprising an annular reinforcing structure (3) and at least one carcass reinforcement (4) which is anchored in the pair of bead regions (2), a protector portion (5) positioned axially outward and radially inward from the annular reinforcing structure (3), the protector portion (5) comprising a protector surface (51) intended to come into contact at least partly with a rim flange (J1) and/or a rim sheet (J2) of a wheel rim (J), the protector portion (5) being provided with at least 2 recessed portions (52) recessed from the protector surface (51) toward interior of the tire (1) with a depth D, the at least 2 recessed portions (52) having a minimum distance T between one another,
the tire being **characterized in that** Young's modulus E of a rubber composition constituting the protector portion (5) is in a range from 1.5 to 6.0 MPa.

2. The tire (1) according to Claim 1, wherein the at least 2 recessed portions (52) are at least 2 grooves extending in circumferential orientation.

3. The tire (1) according to Claim 1, wherein each the at least 2 recessed portions (52) have circular, triangular, rectangular, polygonal or combination of these shapes on the protector surface (51).

4. The tire (1) according to Claim 1, wherein the at least 2 recessed portions (52) are combination of at least 2 grooves extending in circumferential orientation and recesses having circular, triangular, rectangular, polygonal or combination of these shapes on the protector surface (51).

5. The tire (1) according to any one of the Claims 1 to 4, wherein the depth D of the at least 2 recessed portions (52) is in a range from 40 to 80% of a shortest distance from the protector surface (51) to the axially outermost carcass reinforcement (4) at a position where the plurality of recessed portions (52) being located.

6. The tire (1) according to any one of the Claims 1 to 5, wherein a void ratio on the protector surface (51) due to the at least 2 recessed portions (52) is in a range from 35 to 65%.

7. The tire (1) according to any one of the Claims 1 to 6, wherein an aspect ratio defined as a ratio between the depth D of the at least 2 recessed portions (52) and the minimum distance T between each the at least 2 recessed portions (52) (D/T) is in a range from 2/3 to 4/3.

## Patentansprüche

1. Reifen (1), der ein Paar Wulstregionen (2), die eine ringförmige Verstärkungsstruktur (3) und mindestens eine Karkassenverstärkung (4) umfassen, die in dem Paar Wulstregionen (2) verankert ist, und einen Schutzabschnitt (5) umfasst, der axial außerhalb und radial innerhalb von der ringförmigen Verstärkungsstruktur (3) positioniert ist, wobei der Schutzabschnitt (5) eine Schutzoberfläche (51) umfasst, die dazu bestimmt ist, zumindest teilweise mit einem Felgenhorn (J1) und/oder einem Felgenblatt (J2) einer Radfelge (J) in Berührung zu kommen, wobei der Schutzabschnitt (5) mit mindestens 2 vertieften Abschnitten (52) versehen ist, die von der Schutzoberfläche (51) hin zum Inneren des Reifens (1) mit einer Tiefe D vertieft sind, wobei die mindestens 2 vertieften Abschnitte (52) einen Mindestabstand T zwischen einander aufweisen,
wobei der Reifen **dadurch gekennzeichnet ist, dass** das Elastizitätsmodul E einer Gummizusammensetzung, die den Schutzabschnitt (5) bildet, in einem Bereich von 1,5 bis 6,0 MPa liegt.

2. Reifen (1) nach Anspruch 1, wobei die mindestens 2 vertieften Abschnitte (52) mindestens 2 Rillen sind, die sich in Umfangsausrichtung erstrecken.

3. Reifen (1) nach Anspruch 1, wobei jeder der mindestens 2 vertieften Abschnitte (52) kreisförmige, dreieckige, rechteckige, vieleckige oder eine Kombination dieser Formen auf der Schutzoberfläche (51) aufweist.

4. Reifen (1) nach Anspruch 1, wobei die mindestens 2 vertieften Abschnitte (52) eine Kombination von mindestens 2 Rillen, die sich in Umfangsausrichtung erstrecken, und Vertiefungen sind, die kreisförmige, dreieckige, rechteckige, vieleckige oder eine Kombination dieser Formen auf der Schutzoberfläche (51) aufweisen.

5. Reifen (1) nach einem der Ansprüche 1 bis 4, wobei die Tiefe D der mindestens 2 vertieften Abschnitte (52) in einem Bereich von 40 bis 80 % eines kürzesten Abstands von der Schutzoberfläche (51) zur axial äußersten Karkassenverstärkung (4) an einer Position liegt, wo die Vielzahl von vertieften Abschnitten (52) sich befinden.

6. Reifen (1) nach einem der Ansprüche 1 bis 5, wobei ein Hohlraumanteil auf der Schutzoberfläche (51) aufgrund der mindestens 2 vertieften Abschnitte (52) im Bereich von 35 bis 65 % liegt.

7. Reifen (1) nach einem der Ansprüche 1 bis 6, wobei ein Seitenverhältnis, das als ein Verhältnis zwischen der Tiefe D der mindestens 2 vertieften Abschnitte (52) und dem Mindestabstand T zwischen jedem der mindestens 2 vertieften Abschnitte (52) (D/T) definiert ist, in einem Bereich von 2/3 bis 4/3 liegt.

## Revendications

1. Pneu (1) comprenant une paire de régions de talon (2) comprenant une structure de renforcement annulaire (3) et au moins une armature de carcasse (4) qui est ancrée dans la paire de régions de talon (2), une partie de protection (5) positionnée axialement à l'extérieur et radialement à l'intérieur de la structure de renforcement annulaire (3), la partie de protection (5) comprenant une surface de protection (51) destinée à entrer en contact au moins partiellement avec un rebord de jante (J1) et/ou une feuille de jante (J2) d'une jante de roue (J), la partie de protection (5) étant pourvue d'au moins 2 parties évidées (52) évidées à partir de la surface de protection (51) vers l'intérieur du pneu (1) avec une profondeur D, les au moins 2 parties évidées (52) ayant une distance minimale T entre elles,
le pneu étant **caractérisé en ce que** le module de Young E d'une composition de caoutchouc constituant la partie protectrice (5) est dans une gamme de 1,5 à 6,0 MPa.

2. Pneumatique (1) selon la revendication 1, **dans lequel** les au moins 2 parties évidées (52) sont au moins 2 rainures s'étendant selon une orientation circonférentielle.

3. Pneumatique (1) selon la revendication 1, **dans lequel** chacune des au moins 2 parties en creux (52) a des formes circulaires, triangulaires, rectangulaires, polygonales ou une combinaison de ces formes sur la surface protectrice (51).

4. Pneumatique (1) selon la revendication 1, **dans lequel** les au moins 2 parties en creux (52) sont une combinaison d'au moins 2 rainures s'étendant dans une orientation circonférentielle et de creux ayant des formes circulaires, triangulaires, rectangulaires, polygonales ou une combinaison de ces formes sur la surface de protection (51).

5. Pneumatique (1) selon l'une quelconque des revendications 1 à 4, **dans lequel** la profondeur D des au moins 2 parties évidées (52) est dans une plage de 40 à 80 % de la distance la plus courte entre la surface de protection (51) et l'armature de carcasse axialement la plus extérieure (4) à une position où la pluralité de parties évidées (52) est située.

6. Pneumatique (1) selon l'une quelconque des revendications 1 à 5, dans lequel un taux de vide sur la surface de protection (51) dû aux au moins 2 parties évidées (52) est dans une plage de 35 à 65%.

7. Pneumatique (1) selon l'une quelconque des revendications 1 à 6, **dans lequel** un rapport d'aspect défini comme un rapport entre la profondeur D des au moins 2 parties évidées (52) et la distance minimale T entre chacune des au moins 2 parties évidées (52) (D/T) est dans une gamme de 2/3 à 4/3.
